# EUROPEAN PATENT APPLICATION

(11) **EP 2 823 795 A1**
(43) Date of publication of application: **14.01.2015**
(21) Application number: 14167968.8
(22) Date of filing: 12.05.2014
(51) Int. Cl.: A61G 5/04, B62B 3/00, A61H 3/04

(54) **Electric assisted walker**

(30) Priority: 23.05.2013 JP 2013108773
(71) Applicant: Funai Electric Co., Ltd., Daito city Osaka 574-0013 (JP)
(72) Inventor: Kojina, Atsushi, Osaka, Osaka 574-0013 (JP)
(74) Representative: Osha Liang SARL

(57) **Abstract**

A manually propelled vehicle (1) and a method for controlling a manually propelled vehicle (1) are provided. The manually propelled vehicle (1) includes a vehicle body (10), a grip (20) for a user to grip when walking, a wheel system (30) for moving the vehicle body along with the walking user, a wheel driver (91) for electromotively driving the wheel system (30), a grip sensor (71) configured to monitor distribution of pressure applied to the grip (20), and a controller (80) configured to set parameters of the wheel driver (91) according to output of the grip sensor (71).

## Description

### [Technical Field]

The present invention relates generally to a manually propelled vehicles, such as, for example, ambulatory assist vehicles, baby carriages, dollies, wheelchairs, and the like.

### [Background Art]

Conventional manually propelled vehicles are configured so as to change direction freely according to the difference of the external force applied to right and left grips. Further, in recent years, development of mobile assistance tools for going out have advanced with the application of robotic technologies such as sensors and actuators, and the mounting of manual assistive functions (so-called motor assisted functions) onto manually propelled vehicles (particularly in ambulatory assist vehicles to support elderly or people with trouble walking to go out) are being studied.

As an example of conventional art relevant to the present invention, Patent Document 1 discloses a control device for turning assist of a moving body according to an angular velocity at the time of rotation by a body of the moving body traveling according to an external force. Furthermore, Patent Document 2 discloses a passive mobility carriage that can appropriately assist a person by installing a force sensor and the like in an area where the person makes contact, and from such information, estimate an intent and condition of the person and regulate a braking force of each wheel. Moreover, Patent Document 3 discloses a moveable chair provided with input value detection means (six-axis force sensor) that detects an input force onto a grip and that conducts drive control of a movement actuator to move a base at a target speed according to such detected value.

Moreover, Patent Document 4 discloses an ambulatory assist vehicle that can set a movement resistance when moving forward, moving backward and turning, and also automatically switch a movement feature according to the moving state. Also, Patent Document 5 discloses a movable dolly that determines a physical condition and mobility condition of a user by detecting the relative position of the moving body and the user, and according to a result, it carries out a movement control that is close to the intent of the user.

### [Related Art Documents]

### [Patent Documents]

[Patent Document 1] Japanese Unexamined Patent Application Publication 2012-66783
[Patent Document 2] Specification of Japanese Patent No. 441,415
[Patent Document 3] Japanese Unexamined Patent Application Publication 2012-90914
[Patent Document 4] Specification of Japanese Patent No. 2,898,969
[Patent Document 5] Specification of Japanese Patent No. 4,665,173

However, when practically realizing a manually propelled vehicle provided with manual assistive functions, a sensing method that detects intent and a walking posture of a user and an electromotor assisting method for reflecting the detected result in the manual assisting operation have not been necessarily established, and there has been room for further consideration in increasing the safety and convenience of a manually propelled vehicle.

The conventional art of Patent Document 1 requires capturing intent to turn as rotation of the support shaft (single shaft) which puts restrictions on the structure of the vehicle body which is the subject of application. Further, in the conventional art of Patent Document 2, no specific configuration is disclosed concerning a force sensor for detecting intent of a user. Also, in the conventional art of Patent Document 3, a six-axis force sensor is employed that detects the respective forces applied in three mutually orthogonal axes directions and the momentum around each axis as an input value detection means that detects the input onto a grip, resulting in high cost.

Furthermore, in the conventional art of Patent Documents 4 and 5, neither has taken the acting force applied in the vertical direction of the moving body from the user into account, and when applying this to a manually propelled vehicle, there is room to further consider increasing safety.

### [Summary of the Invention]

In one aspect, one or more embodiments of the present invention provide a manually propelled vehicle with a simple configuration that can assist human power according to a walking posture and intent of a user.

In one or more embodiments, the manually propelled vehicle may comprise: a vehicle body; a grip for a user to grip when walking; a wheel system for moving the vehicle body along with the walking user; a wheel driver for electromotively driving the wheel system; a grip sensor configured to monitor distribution of pressure applied to the grip; and a controller configured to set parameters of the wheel driver according to output of the grip sensor.
In one or more embodiments, the wheel driver may comprise a motor, such as an electromotor, to drive the wheel system. In one or more embodiments, the controller may be configured to set parameters of the wheel driver and of any part thereof. For example, the parameters may comprise a rotation direction of a motor of the wheel driver, a rotation speed thereof, and a target value of the rotation torque thereof. Further examples are described in the detailed description of embodiments.
In another aspect, according to one or more embodiments, a method for controlling the manually propelled vehicle may comprise: monitoring distribution of pressure applied to the grip using a grip sensor; and setting parameters of the wheel driver according to output of the grip sensor. By having such a configuration, for example, human power can be assisted according to the intent and walking posture of the user with a simple configuration that monitors a distribution of pressure applied to the grip. Embodiments of the method are defined in the dependent method claims.

In one or more embodiments of the manually propelled vehicle, the wheel system may comprise right and left drive wheels that may be driven and controlled independently. The controller may comprises: a processor configured to determine a turning target value according to the output of the grip sensor; and a wheel drive controller configured to control rotation direction and rotation speed of the right and left drive wheels according to the turning target value. Providing such a configuration allows, for example, turning to be assisted according to the intent of the user.

In one or more embodiments of the manually propelled vehicle, the processor may be further configured to detect whether the grip is operated by both hands or one hand of the user according to the output of the grip sensor, and, when the processor detects that the grip is operated by both hands, the turning target value may be determined according to a comparison result between a distribution of pressure applied by the left hand and a distribution of pressure applied by the right hand. Providing such a configuration allows, for example, turning to be assisted according to the intent of the user without depending on whether the grip is operated by both hands or one hand.

In one or more embodiments of the manually propelled vehicle, when the processor detects, according to the output of the grip sensor, that the user is not gripping the grip, the controller may control the wheel driver so as to stop or apply a brake to an electromotive drive of the wheel system. Providing such a configuration allows, for example, increased safety, particularly when walking downhill, because the manually propelled vehicle stops immediately if the user releases their hand from the grip while walking.

In one or more embodiments of the manually propelled vehicle, when the processor detects, according to the output of the grip sensor, that the pressure applied in a ground direction with respect to the grip is distributed continuously in an extending direction of the grip when the user is walking, the controller may control the wheel driver to lower target values for speed and acceleration of the manually propelled vehicle to be lower than the target values for speed and acceleration in a steady state. Providing such a configuration allows, for example, reduced risk such from falling down or the like by leaning on the vehicle while walking.

In one or more embodiments, the manually propelled vehicle may further comprise a notifier for notifying the user information, wherein, when the processor detects, according to the output of the grip sensor, that a time mean value of the pressure applied in a ground direction with respect to the grip is outside a predetermined range when the user is walking, the controller controls the notifier so as to notify information, such as a recommendation to adjust a height of the grip. Providing such a configuration allows, for example, improved safety and reduced burden to be realized while walking because a height adjustment can be prompted by bringing attention to the user that the height of the grip is inappropriate.

In one or more embodiments of the manually propelled vehicle, the grip sensor may be a sheet-like member comprising a plurality of pressure sensors arranged in a matrix. Providing such a configuration allows, for example, a distribution of pressure applied to the grip to be monitored with a simple configuration.

In one or more embodiments, the manually propelled vehicle may further comprise a ground sensor configured to detect a grounded state of the wheel system, wherein, when the processor detects, according to the output of the ground sensor, that the wheel system is not grounded, the controller controls the wheel driver so as to stop or apply a brake to the electromotive drive of the wheel system. Providing such a configuration allows increased safety when a drive wheel is ungrounded.

In one or more embodiments of the manually propelled vehicle, the wheel system may further comprise at least one idler wheel, and the manually propelled vehicle may further comprise a ground sensor configured to detect a grounded state of the at least one idler wheel, wherein, when the processor detects, according to the output of the ground sensor, that the at least one idler wheel is not grounded, the controller controls the wheel driver to lower target values of speed and acceleration of the manually propelled vehicle than the target values of speed and acceleration in a steady state. Providing such a configuration allows, for example, increased safety when the at least one idler wheel is ungrounded.

One or more embodiments of the present invention can provide a manually propelled vehicle with a simple configuration that can assist human power according to a walking posture and intent of a user.

In one or more embodiments, when the processor detects that the grip is operated by one hand, the processor divides a region where the pressure is applied by one hand into a first sub region and a second sub region and calculates the turning target value according to the comparison result of a distribution of pressure applied to the first sub region and a distribution of pressure applied to the second sub region.

### [Brief Description of the Drawings]

FIG. 1 is an external view illustrating a first example of an ambulatory assist vehicle in accordance with one or more embodiments.
FIG. 2 is a functional block diagram illustrating the first example of the ambulatory assist vehicle in accordance with one or more embodiments.
FIG. 3 is a schematic diagram illustrating an example of a configuration of a wheel system and a wheel driver in accordance with one or more embodiments.
FIG. 4 is a functional block diagram illustrating an example of a configuration of the wheel drive functional part in accordance with one or more embodiments.
FIG. 5 is a perspective view illustrating an example of a configuration of a grip sensor in accordance with one or more embodiments.
FIG. 6 is a plan exploded view illustrating an example of a configuration of the grip sensor in accordance with one or more embodiments.
FIG. 7 is a pressure distribution diagram of when moving by manual propulsion (when moving forward, moving backward, and stopping) in accordance with one or more embodiments.
FIG. 8 is an explanatory diagram of a turning assist function operated by both hands in accordance with one or more embodiments.
FIG. 9 is an explanatory diagram of the turning assist function operated by one hand in accordance with one or more embodiments.
FIG. 10 is an external view illustrating a second example of the ambulatory assist vehicle in accordance with one or more embodiments.
FIG. 11 is a schematic diagram illustrating an example of a configuration of a wheel system and a wheel driver in accordance with one or more embodiments.
FIG. 12 is a functional block diagram illustrating an example of a configuration of the wheel drive functional part in accordance with one or more embodiments.
FIG. 13 is a correlation explanatory drawing of walking posture and pressure distribution in accordance with one or more embodiments.
FIG. 14 is a correlation explanatory drawing of height of the grip and pressure distribution in accordance with one or more embodiments.
FIG. 15 is a functional block diagram illustrating a third example of the ambulatory assist vehicle in accordance with one or more embodiments.
FIG. 16 is a list of drawings of shapes that can be incorporated as the grip in accordance with one or more embodiments.

### [Detailed Description of Embodiments]

### < First Example >

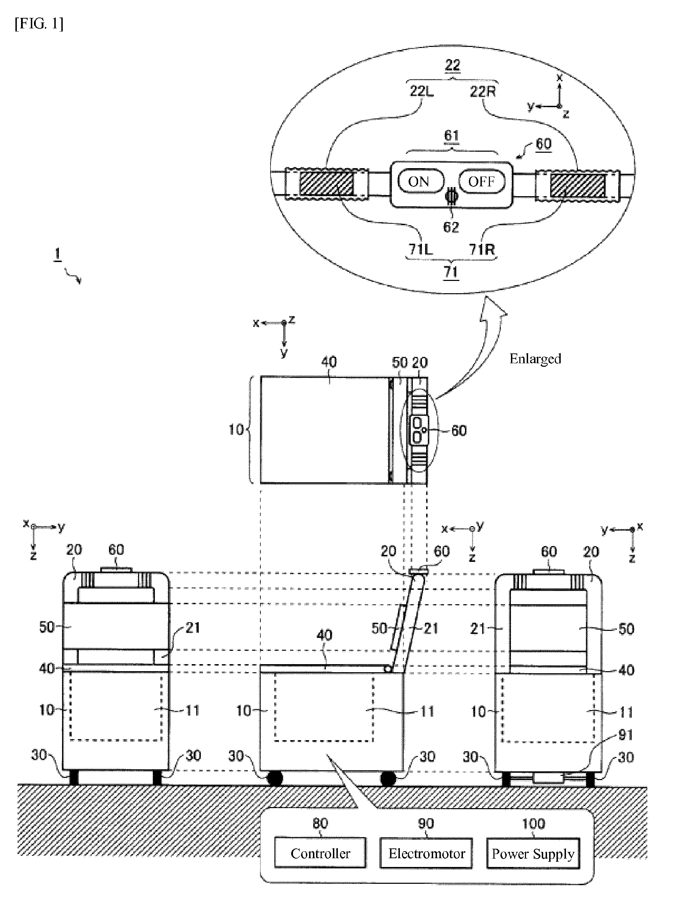

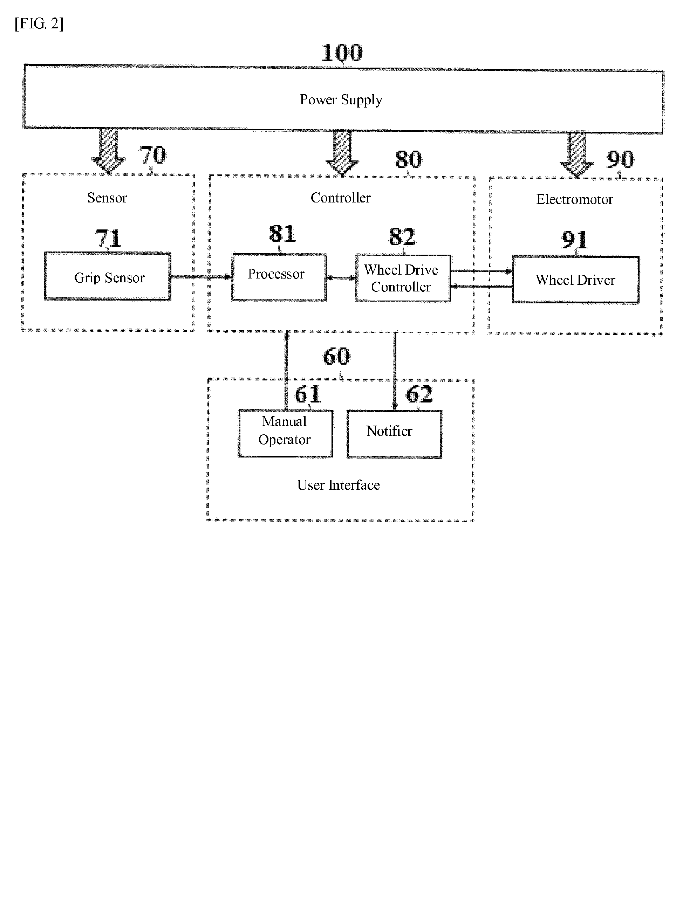

FIG. 1 and FIG. 2 are an external view and a functional block diagram respectively illustrating a first example of a manually propelled vehicle in accordance with one or more embodiments. In these figures, the manually propelled vehicle has a configuration of an ambulatory assist vehicle 1. However, other configurations are possible. The lower part of FIG. 1 schematically illustrates from left to right on the sheet, a front view (front elevation view), a left lateral view, and a posterior view (back elevation view) of the ambulatory assist vehicle 1, and the middle center part of FIG. 1 illustrates a top view of the ambulatory assist vehicle 1. Further, the upper part of FIG. 1 schematically illustrates an enlarged view of a grip.

According to one or more embodiments, the ambulatory assist vehicle 1 assists walking of a user (mainly elderly whose lower body has declined) and is a manually propelled vehicle (a so-called walker) that can also be used as a basket for carrying bags and a chair to rest. The vehicle 1 may include a vehicle body 10, a grip 20, a wheel system 30, a seat 40, a backrest 50, a user interface 60, a sensor 70, a controller 80, an electromotor 90, and a power supply 100.

The vehicle body 10 is a chassis (framework) of the ambulatory assist vehicle 1, and the elements 20 to 100 listed above are attached to the vehicle body 10. Further, a space as a luggage compartment 11 may be provided inside the vehicle body 10, for example in the lower part of the seat 40. A stainless steel, aluminum alloy, or the like may be used for the frame material forming the vehicle body 10.

The grip 20 may comprise a member the user grips when walking. The grip 20 may be connected to the vehicle body 10 via a support 21. The user can move forward, backward, brake, and turn by applying human power by gripping the grip 20 with both hands or one hand. In addition, the grip 20 may comprise a slip resistance grip 22, which may comprise a left hand grip 22L and a right hand grip 22R. Further, the ambulatory assist vehicle 1 may comprise a height adjustment mechanism, which may be provided to the grip 20 or the support 21.

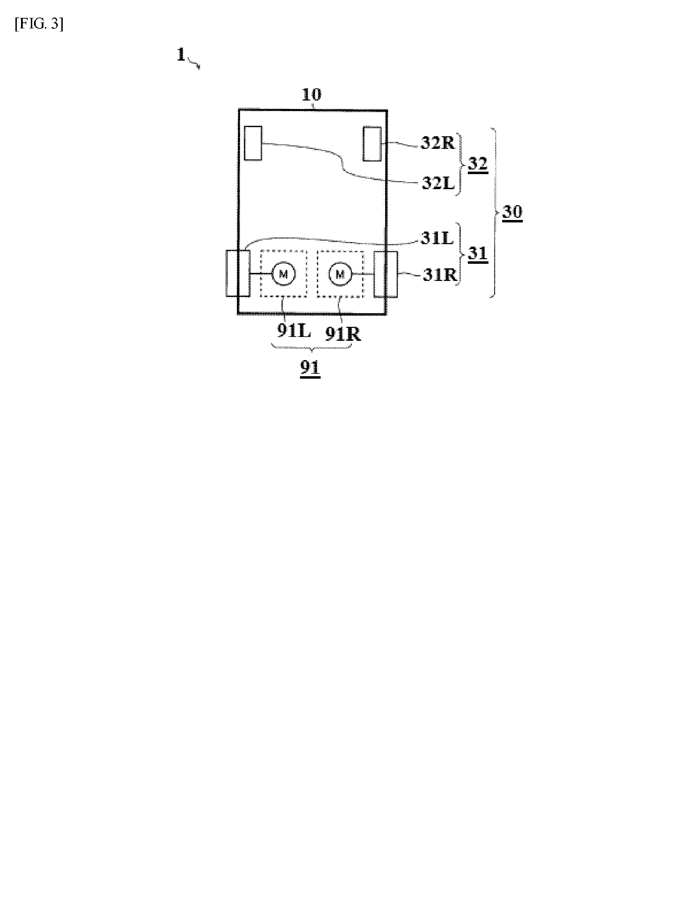

The wheel system 30 may comprise an annular member configured to move the vehicle body 10 along the ground by rotating in harmony with the walking of the user. FIG. 3 is a schematic diagram illustrating an example of a configuration of the wheel system 30 and a wheel driver 91. As illustrated in FIG. 3, the wheel system 30 comprises a four-wheel structure. The wheel system 30 may comprise drive wheels 31, which may include right and left drive wheels 31R and 31L, that are rotated at the axle center by human power (or auxiliary power), and idler wheels 32, which may include right and left idler wheels 32R and 32L, for turning direction. The rotation speed and rotation direction of the right and left drive wheels 31R and 31L may be driven and controlled independently by corresponding wheel drivers 91R and 91L, each associated to a respective drive wheel.

The seat 40 may comprise a plate-like member for the user to sit down on when seating. Further, the seat 40 may also function as an upper lid of the luggage compartment 11 and may be attached so as to enable the upper opening part of the luggage compartment 11 to open and close.

The backrest 50 may comprise a plate-like member for the user to lean back against when seating. In addition, the backrest 50 may be attached to the support 21 or integrally provided with the vehicle body 10.

The user interface 60 is a means for exchanging information between the user and the controller 80, and may comprise a manual operator 61 and a notifier 62. The manual operator 61 is a means for receiving the manual operation of the user including, for example, an on/off button, switch, slider, etc. on the electromotor assist function. The notifier 62 is a means for informing the user of various information. The notifier 62 may comprise a light emitting diode, a liquid crystal display panel, or the like, or a speaker, as illustrated. The user interface 60 may be positioned where the user can easily operate, for example, on the grip 20, that is near the height of the eyes of the user.

The sensor 70 is a means for monitoring surrounding conditions, usage condition of the ambulatory assist vehicle 1 or a walking posture of the user. The sensor 70 comprises a grip sensor 71, in the first example. The grip sensor 71 is a means for monitoring a distribution of pressure applied to the grip 20. In the embodiment shown in FIG. 1, the grip sensor 71 comprises a left hand grip sensor 71L provided at the left hand grip 22L and a right hand grip sensor 71R provided at the right hand grip 22R.
A description of an exemplary structure of the grip sensor 71 will be given later.

The controller 80 may comprise a logic circuit, such as for example a microcomputer, which may comprehensively control the user interface 60, the sensor 70 and the electromotor 90. In the embodiment of FIG. 2, the controller 80 may comprise a processor 81 and a wheel drive controller 82, which in FIG. 2 are shown as functional blocks, to assist human power according to a walking posture and intent of the user by setting a variety of parameters (such as rotation direction of the motor, rotation speed, and each target value of the rotation torque) of the wheel driver 91 according to the output of the grip sensor 71. The processor 81 determines a turning target value according to the output of the grip sensor 71. The wheel drive controller 82 controls the rotation direction and the rotation speed of the right and left drive wheels 32R and 32L according to the turning target value. A description of the various functions of the controller 80 will be given later with reference to specific examples.

The electromotor 90 is a means for driving each part of the ambulatory assist vehicle 1 according to an instruction from the controller 80, and comprises the wheel driver 91 that uses an electromotor to drive the wheel system 30 according to the instruction of the controller 80 in the first example. Particularly, in the first example, the right and left wheel drivers 91R and 91L individually (refer to FIG. 3 mentioned above) control the right and left drive wheels 31R and 31 L independently.

The electric power supply 100 is a means for supplying electric power to the user interface 60, sensor 70, controller 80, and the electromotor 90. The electric power supply 100 may comprise a secondary battery (such as a nickel-hydrogen battery and lithium-ion battery), which may be attached to the vehicle body 10 in a removable manner.

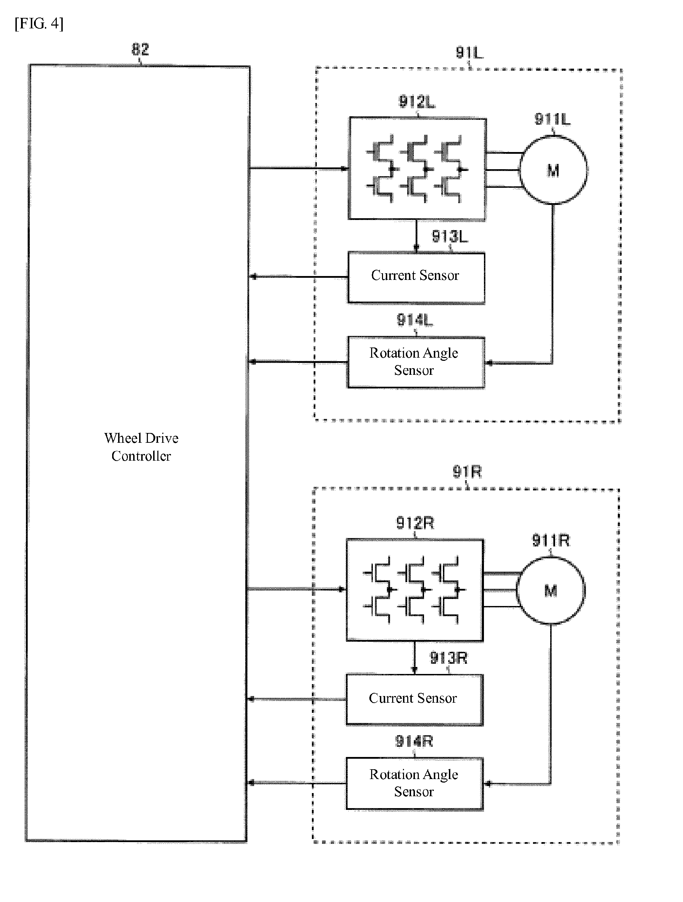

FIG. 4 is a functional block diagram illustrating an example of a configuration of the wheel drivers 91R and 91L. The wheel drivers 91R and 91L comprise motors 911R and 911L, motor drives 912R and 912L, current sensors 913R and 913L, and rotation angle sensors 914R and 914L, respectively.

Each of the motors 911R and 911L rotates and drives the right and left drive wheels 31R and 31L independently. Each of the motor drives 912R and 912L may comprise an inverter circuit for generating a drive current of the motors 911R and 911L, respectively, according to a control signal from the controller 80. Each of the current sensors 913R and 913L, respectively, detects the driving currents that flow to the motors 911R and 911L. Each of the rotation angle sensors 914R and 914L, respectively, detects the rotation angles of the motors 911R and 911L. The wheel drive controller 82 may perform feedback control of the motor drivers 912R and 912L so as to match the rotation direction and rotation speed of the motors 911R and 911L to the target values according to each output of the current sensors 913R, 913L and the rotation angle sensors 914R, 914L.

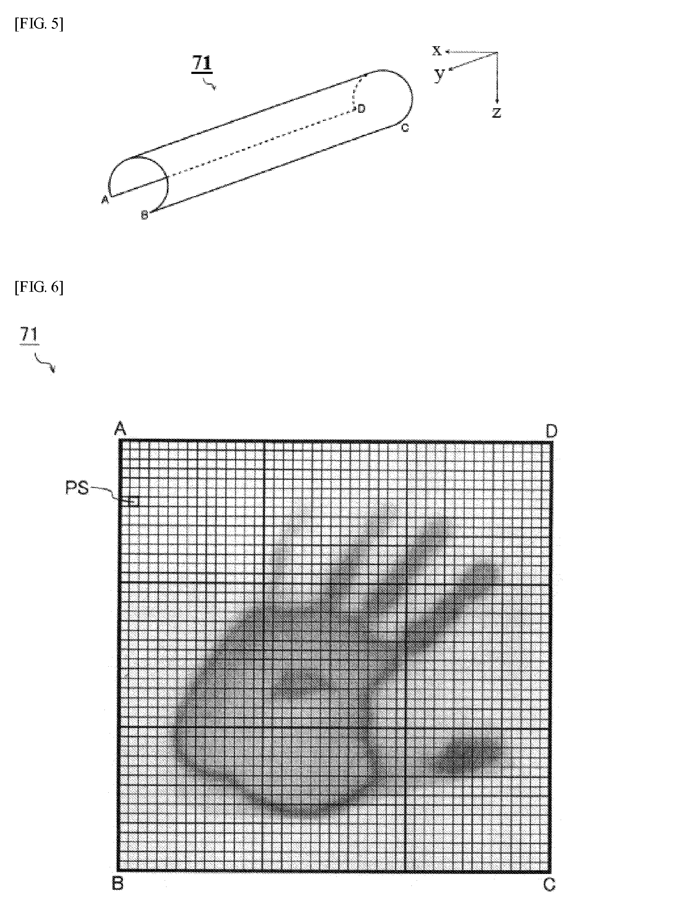

FIG. 5 and FIG. 6 are a perspective view and plan exploded view, respectively, illustrating an example of a configuration of the grip sensor 71, and the reference codes A to D corresponds to four corners of the grip sensor 71 illustrated in both drawings. The grip sensor 71 may comprise a sheet-like member including a plurality of pressure sensors PS arranged in a matrix and may be used by winding around the grip 20. The plurality of pressure sensors PS may output an electric signal in which the signal level (for example, a voltage value) fluctuates according to the amount of pressure applied to each pressure sensor. Accordingly, when the user is holding the grip 20, a distribution of the pressure representing the holding condition is detected at the grip sensor 71. The distribution of the pressure may be detected at both right hand grip sensor 71R and the left hand grip sensor 71L when operated by both hands, and either one of the right hand grip sensor 71R or the left hand grip sensor 71L when operated by one hand according to the holding condition.

The right hand grip sensor 71R and the left hand grip sensor 71L are physically separated in the example of the present configuration; however, the structure of the grip sensor 71 is not limited thereto. The right hand grip sensor 71R and the left hand grip sensor 71L may be formed integrally without separating each other, or conversely, each of the right hand grip sensor 71R and the left hand grip sensor 71 L may be further divided.

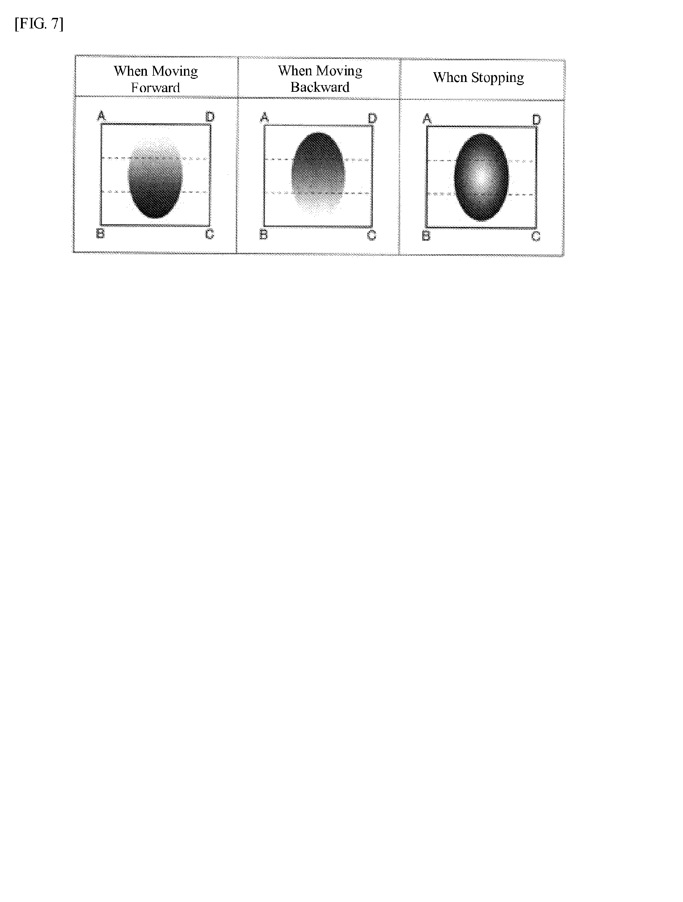

FIG. 7 is a pressure distribution diagram when moving (e.g. moving forward, moving backward, and stopping) the ambulatory assist vehicle 1 by manual propulsion. In this example, the pressure distribution diagram is expressed so that the stronger the pressure, the darker the color. For example, when the user is moving the ambulatory assist vehicle 1 forward by pushing the grip 20, a thenar and a hypothenar (thicker parts near the wrist) of the palm that holds the grip 20 generally strongly contacts the grip sensor 71. Therefore, the front side of the grip sensor 71 (BC edge side viewing from the user) is submitted to greater pressure. In other words, the positive acting force (force pushing in the forward direction) is excelled in the moving direction (X axis direction) of the ambulatory assist vehicle 1. The controller 80 may be configured to set various parameters of the wheel driver 91 when such pressure distribution is detected so that the ambulatory assist vehicle 1 can move forward smoothly and safely.

Meanwhile, when the user is moving the ambulatory assist vehicle 1 backward by pulling the grip 20, balls of four fingers (the forefinger, middle finger, ring finger, little finger) that hold the grip 20 generally strongly contact the grip sensor 71. Therefore, the back side of the grip sensor 71 (AD edge side viewing from the user) is submitted to greater pressure. In other words, the negative acting force (force pulling in the backward direction) is excelled in the moving direction (X axis direction) of the ambulatory assist vehicle 1. The controller 80 may be configured to set various parameters of the wheel driver 91 when such pressure distribution is detected so that the ambulatory assist vehicle 1 can be moved backward smoothly and safely.

Further, when the user is stopping the ambulatory assist vehicle 1 by holding the grip 20, the whole surface of the palm that holds the grip 20 generally strongly contacts the grip sensor 71. Therefore, great pressure is applied to the whole surface of the grip sensor 71. In other words, both positive and negative acting forces exceed a predetermined threshold in the moving direction (X axis direction) of the ambulatory assist vehicle 1 and also the difference value between the two is within a predetermined range. The controller 80 may be configured to set various parameters of the wheel driver 91 when such pressure distribution is detected so that the ambulatory assist vehicle 1 can be stopped smoothly and safely.

On the other hand, the controller 80 may be configured to determine that the user is not holding the grip 20 when a pressure exceeding a predetermined threshold is not applied to either of the right hand grip sensor 71R or the left hand grip sensor 71L, and to control the wheel driver 91 so as to stop or put on the brake of the electromotive drive of the wheel system 30. Therefore, for example, even when the user has released the hand from the grip 20 while walking downhill, there is no risk that the ambulatory assist vehicle 1 keeps slipping down the hill without being able to put on the break because the ambulatory assist vehicle 1 is automatically slowed down or stopped.

Furthermore, the controller 80 may be configured to determine that the user is holding the grip 20 with both hands when pressure exceeding a predetermined threshold is applied onto both right hand grip sensor 71R and the left hand grip sensor 71L. Also the controller 80 may be configured to determine that the user is holding the grip 20 with one hand when pressure exceeding a predetermined threshold is applied onto only one side either the right hand grip sensor 71R or the left hand grip sensor 71L. Then, the controller 80 may be configured to perform an appropriate turning assist control according to the determination result. For example, when the drive wheels 31 are two opposed wheels, the ambulatory assist vehicle 1 can be assisted to turn by controlling the rotation direction and rotation speed of the right and left drive wheels 31R and 31L. A detailed description will be given hereinafter with reference to some detailed examples.

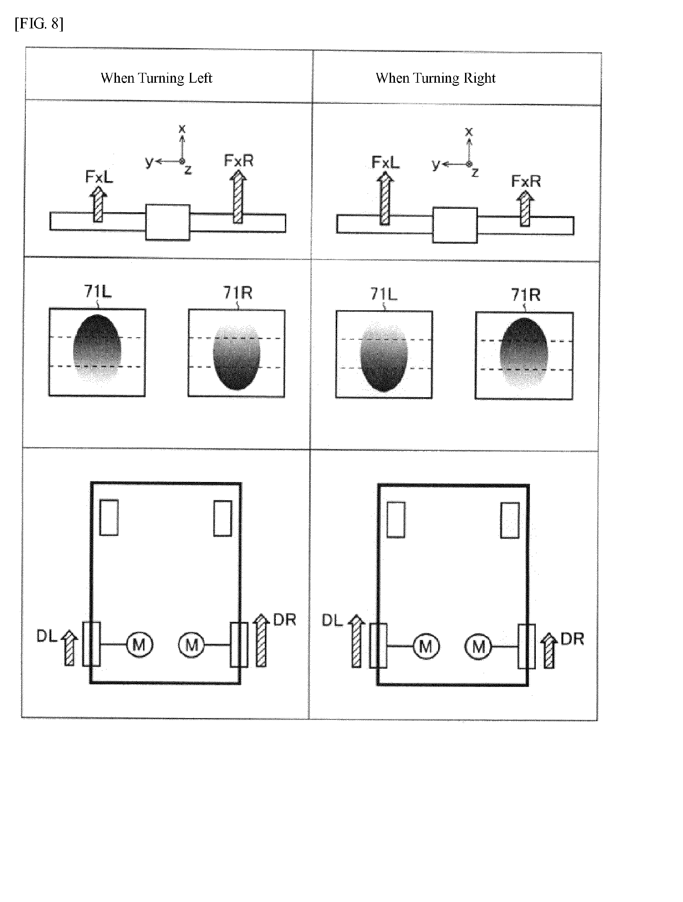

FIG. 8 is an explanatory diagram of a turning assist function with a two-hand operation. When it is determined that the user is operating the grip 20 with both hands, the processor 81 configured to determine a turning target value according to the output of the grip sensor 71 may be configured to determine a turning target value according to a result of comparison between a distribution of pressure applied by the left hand and a distribution of pressure applied by the right hand.

For example, when the ambulatory assist vehicle 1 is turned left by both hands, the user gives the ambulatory assist vehicle 1 a turning force towards the left by pushing the grip 20 forward so as to apply a greater force on the right hand than the left hand, or pulling the grip 20 so as to draw closer by the left hand while pushing the grip 20 forward by the right hand. Conversely, when the ambulatory assist vehicle 1 is turned right by both hands, the user gives the ambulatory assist vehicle 1 a turning force towards the right by pushing the grip 20 forward so as to apply a greater force on the left hand than the right hand, or pulling the grip 20 so as to draw closer by the right hand while pushing the grip 20 forward by the left hand. Accordingly, when the acting force applied to the grip 20 by the left hand is FXL, and the acting force applied to the grip 20 by the right hand is FXR, FXL < FXR when turning left, and FXL > FXR when turning right.

The processor 81 may be configured to set a turning target value according to the difference value (FxL - FxR) of the right and left acting forces. For example, when the drive force of the left drive wheel 31L is DL, and the drive force of the right drive wheel 31R is DR, the processor 81 may determine individually each target value of the rotation direction and the rotation speed of the motors 911L and 911R so as to be DL < DR when turning left (FxL < FxR) while DL > DR when turning right (FxL > FxR). As a result, the right and left drive wheels 31R and 31L are driven and controlled independently so as to assist left turn or right turn of the ambulatory assist vehicle 1.

Even if the user intends to move the ambulatory assist vehicle 1 straight forward, the walking condition of the user or road conditions can cause a considerable difference in both the right and left acting forces FxR and FxL. Therefore, the turning assist control according to the output of the grip sensor 71 may be carried out only when the absolute value |FxL - FxR| of the difference value described above exceeds a predetermined threshold. Providing such a configuration allows the ambulatory assist vehicle 1 to be assisted to turn appropriately without impairing the straightness of the ambulatory assist vehicle 1.

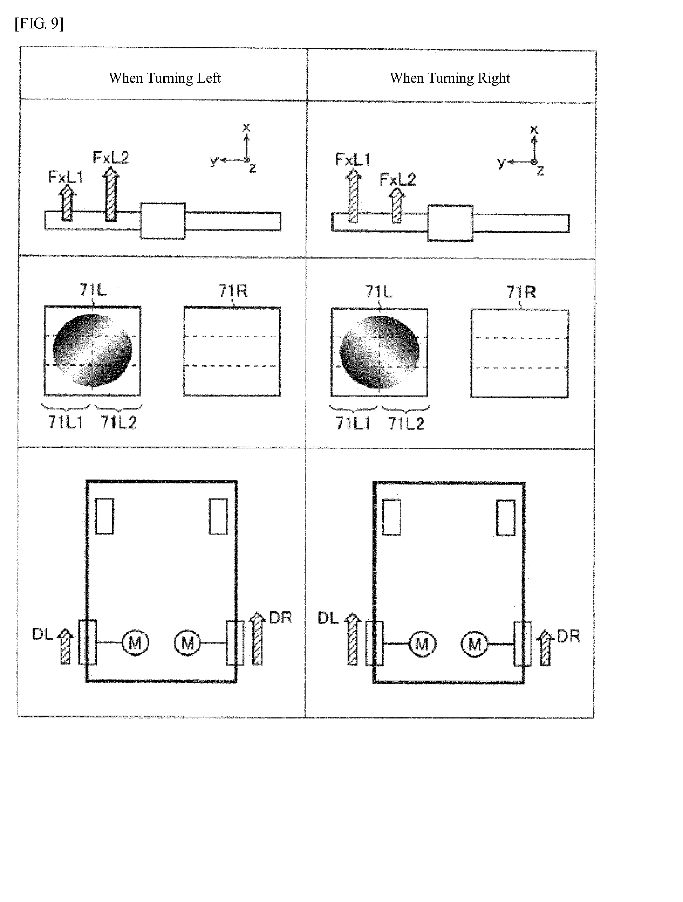

FIG. 9 is an explanatory diagram of a turning assist function by one-hand operation (left hand operation in the example of the drawing). When it is determined that the user is operating the grip 20 with one hand, the processor 81 configured to determine a turning target value according to the output of the grip sensor 71 may be configured to determine a turning target value according to the comparison result between a distribution of pressure applied to a first sub region and a distribution of pressure applied to a second sub region after dividing the region where the pressure is applied by one hand (grip sensor of the side held by one hand when the right hand grip sensor 71 R and the left hand grip sensor 71 L are separately provided) into the first sub region (left half region) and the second sub region (right half region).

For example, when turning the ambulatory assist vehicle 1 to the left using the left hand, the user gives a turning force to the ambulatory assist vehicle 1 towards the left by pushing the grip 20 forward by the thenar of the left hand while twisting the wrist to the left side so as to pull the grip 20 to draw closer by the balls of four fingers. Conversely, when turning the ambulatory assist vehicle 1 to the right using the left hand, the user gives a turning force to the ambulatory assist vehicle 1 towards the right by pushing the grip 20 forward by the hypothenar of the left hand while twisting the wrist to the right side so as to pull the grip 20 to draw closer by the balls of four fingers. Accordingly, for example, when the acting force applied to the first sub region 71L1 of the left hand grip sensor 71L is FxL1 and the acting force applied to the second sub region 71L2 is FxL2 for the acting force applied to the grip 20 by the left hand, FxL1 < FxL2 when turning left, and FxL1 > FxL2 when turning right.

The processor 81 may be configured to set the turning target value according to the difference value (FxL1 - FxL2) of the acting force applied to each sub region. For example, when the drive force of the left drive wheel 31L is DL, and the drive force of the right drive wheel 31R is DR, the processor 81 may determine individually each target value of the rotation direction and the rotation speed of the motors 911L and 911R so as to be DL < DR when turning left (FxL1 < FxL2) while DL > DR when turning right (FxL1 > FxL2). As a result, the right and left drive wheels 31R and 31L are driven and controlled independently so as to assist left turn or right turn of the ambulatory assist vehicle 1.

Even if the user intends to move the ambulatory assist vehicle 1 straight forward, the walking condition of the user or road conditions can cause a significant difference in the acting forces FxL1 and FxL2 applied to each sub region. Therefore, the turning assist control according to the output of the grip sensor 71 may be carried out only when the absolute value |FxL1 - FxL2| of the difference value described above exceeds a predetermined threshold. Providing such a configuration allows the ambulatory assist vehicle 1 to be assisted to turn appropriately without impairing the straightness of the ambulatory assist vehicle 1.

As described above, the manually propelled vehicle having a configuration of an ambulatory assist vehicle 1 as described in the first example comprises the vehicle body 10, the grip 20 for the user to grip when walking, the wheel system 30 for moving the vehicle body 10 in harmony with or along with the walking user, the wheel driver 91 using an electromotor to drive the wheel system 30, a grip sensor 71 for monitoring a distribution of pressure applied to the grip 20, and the controller 80 configured to set parameters of the wheel driver 91 according to the output of the grip sensor 71. Providing such configuration allows human power to be assisted according to intent and walking posture of the user with a simple configuration that monitors the pressure applied to the grip 20.

In the ambulatory assist vehicle 1 according to the first example, the wheel system 30 includes the right and left drive wheels 32R and 32L that are driven and controlled independently, the controller 80 includes the processor 81 that is configured to determine a turning target value according to the output of the grip sensor 71 and the wheel drive controller 82 that is configured to control the rotation direction and the rotation speed of the right and left drive wheels 32R and 32L according to the turning target value. Providing such a configuration allows turning to be assisted according to the intent of the user.

Further, in the ambulatory assist vehicle 1 according to the first example, the processor 81 is configured to determine whether the grip 20 is operated by both hands or one hand according to the output of the grip sensor 71. When the processor 81 determines that the operation is performed by both hands, the turning target value may be determined according to a comparison result between a distribution of pressure applied by the left hand and a distribution of pressure applied by the right hand. Meanwhile, if the processor 81 determines that the operation is performed by one hand, it may divide a region where the pressure is applied by one hand into a first sub region and a second sub region, and may determine a tuning target value according to the comparison result between the distribution of the pressure applied to the first sub region and the distribution of the pressure applied to the second sub region. Providing such a configuration allows turning to be assisted according to the intent of the user without depending on whether the grip 20 is operated by both hands or one hand.

Furthermore, in the ambulatory assist vehicle 1 according to the first example, when it is detected that the user is not gripping the grip 20 according to the output of the grip sensor 71, the controller 80 may control the wheel driver 91 so as to stop or put on the brake to the electromotive drive of the wheel system 30. Providing such a configuration allows increased safety, particularly when walking downhill, because the ambulatory assist vehicle 1 stops immediately if the user releases the hand from the grip 20 while walking.

Moreover, in the ambulatory assist vehicle 1 according to the first example, the grip sensor 71 may comprise a sheet-like member including a plurality of pressure sensors PS arranged in a matrix and may be used by winding around the grip 20. Providing such a configuration allows the distribution of pressure applied to the grip 20 to be monitored with a simple configuration.

### [Second Example]

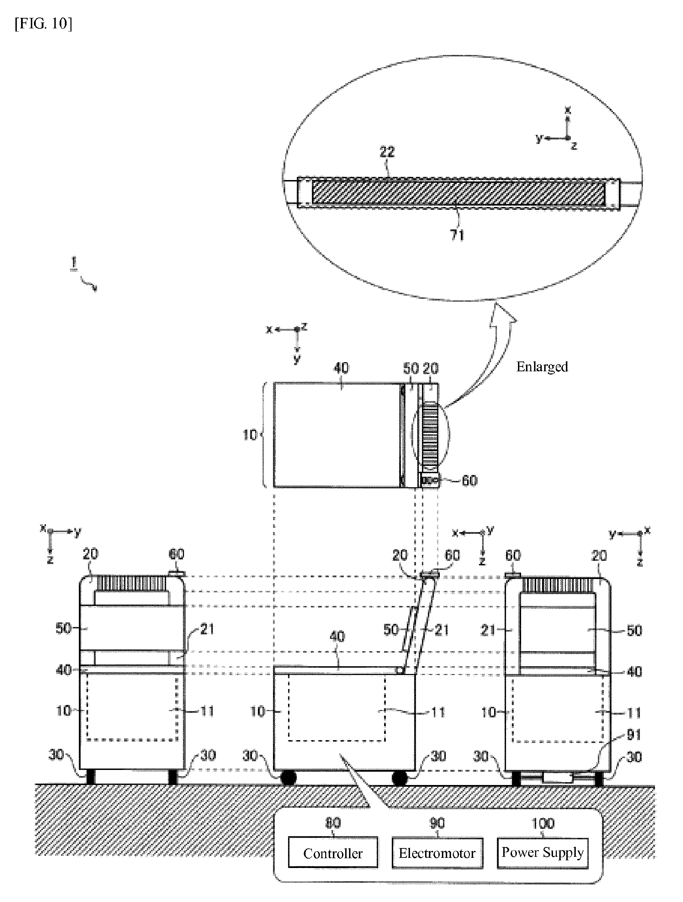

FIG. 10 is an external view illustrating a second example of a manually propelled vehicle having a configuration of an ambulatory assist vehicle 1. One or more embodiments of the second example may have fundamentally the same or substantially similar configuration as the first example, and may comprise a grip sensor 71 provided in the entire grip 20 as a means to detect a walking condition when the user is leaning on the vehicle. Accordingly, the same or similar elements as those in the first example are given the same reference codes as FIG. 1 and any duplicated description will be omitted. Descriptions of exemplary features of the second example will be given in detail hereinafter.

A grip sensor 71 is provided on not only parts where a user grips by both hands but is provided so as to cover the entire grip 20. That is, the grip sensor 71 does not have a configuration so that the right hand grip sensor 71R and the left hand grip sensor 71L are separated in right and left portions, but is configured so that both grip sensors are provided integrally. Further, in such configuration, a slip resistance grip 22 may be modified to a form covering the entire grip 20, and the position of a user interface 60 may be changed to a location (for example, right and left end parts of the grip 20) that does not interfere with the grip sensor 71.

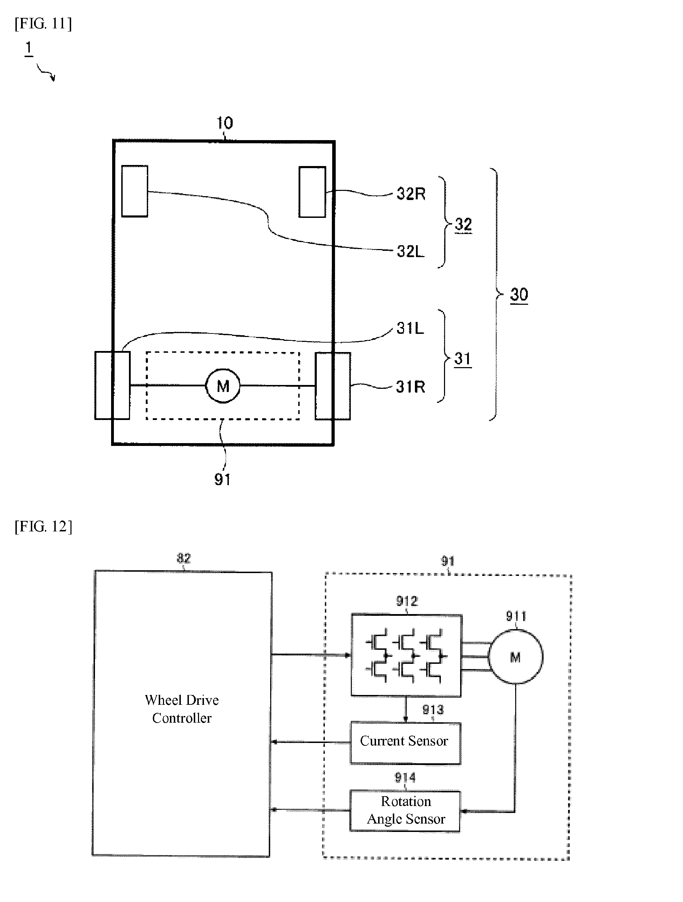

FIG. 11 is a schematic diagram illustrating an example of a configuration of a wheel system 30 and wheel driver 91. FIG. 12 is a functional block diagram illustrating an example of a configuration of the wheel driver 91. When the turning assist function described in the first example above is not mounted in the ambulatory assist vehicle 1 of the second example, there is no need to drive and control the right and left drive wheels 31R and 31L independently, so that the wheel driver 91 can be unified for the right and left drive wheels 31R and 31L.

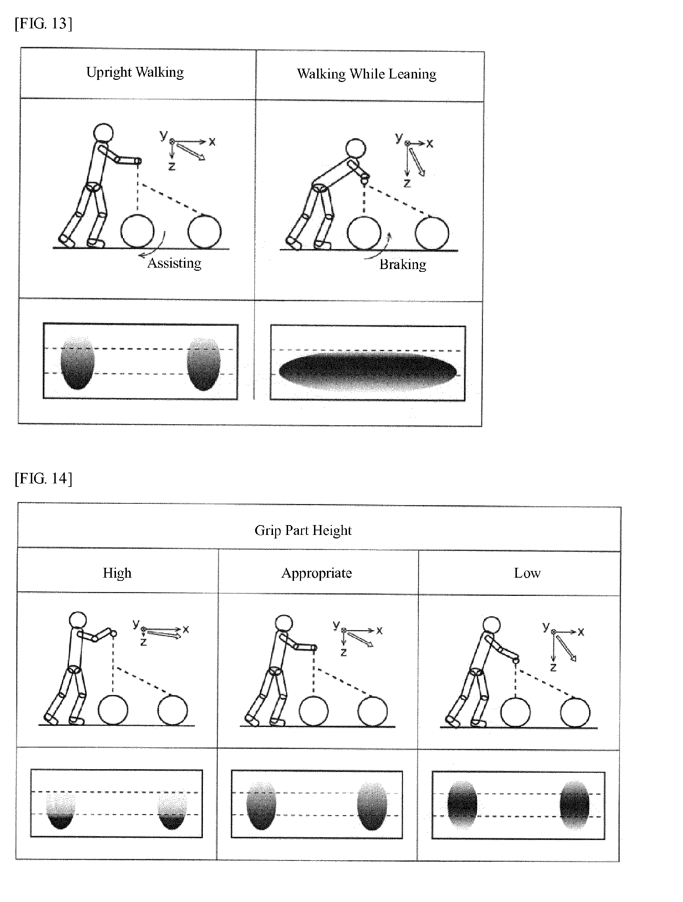

FIG. 13 is a correlation explanatory diagram of a walking posture of a user and a pressure distribution detected by the grip sensor 71. If the manually propelled vehicle is designed for a person without disability, the electromotor assist control is allowed on the premise that the person is capable of a certain level of manipulation skill and motion. Meanwhile, the ambulatory assist vehicle 1 to support outside activity of an elderly or a person who feels uneasy about walking requires a detailed electromotor assist control according to the walking posture of the user. For example, a different electromotor assist control may be required when walking with the proper posture and when walking with improper posture (leaning on while walking).

As illustrated on the left side of FIG. 13, when the user moves the ambulatory assist vehicle 1 forward by pushing with both hands on the grip 20 with the proper posture, a distribution of the pressure detected by the grip sensor 71 is concentrated on the region where the user grips by both hands, and also the positive acting force (pushing force in the forward direction) is excelled in the traveling direction (X axis direction) of the ambulatory assist vehicle 1. When detecting such pressure distribution, the controller 80 sets various parameters of the wheel driver 91 so as to move the ambulatory assist vehicle 1 forward smoothly and safely. For example, the controller 80 may perform the electromotor assistance to reduce the burden of the user by suitably setting each target value of the speed and acceleration of the ambulatory assist vehicle 1 or driving torque according to the positive acting force in the moving direction (X axis direction) of the ambulatory assist vehicle 1.

On the other hand, as illustrated on the right side of FIG. 13, when the user moves the ambulatory assist vehicle 1 forward by leaning on the grip 20, a distribution state of pressure detected by the grip sensor 71 becomes the state where the pressure (load) applied in the ground direction (Z axis direction), with respect to the upper surface of the grip 20 from the forearm of the user, is widely and continuously distributed in the extending direction (y axis direction) of the grip 20. When detecting such pressure distribution, the controller 80 sets the various parameters of the wheel driver 91 so that the ambulatory assist vehicle 1 can be stopped smoothly and safely. For example, the controller 80 may control the wheel driver 91 so as to reduce the target values of the speed and acceleration of the ambulatory assist vehicle (manually propelled vehicle) 1 to be lower than those of a steady state.

When the configuration is made in such manner presuming a walking posture from the distribution state of pressure (pressure distribution state particularly of the ground direction (Z axis direction) that has not been particularly considered) detected by the grip sensor 71, the positions of feet and the upper body of the user need not to be detected, and therefore, there is no need to provide a number of sensors.

FIG. 14 is a correlation explanatory diagram of a height of the grip 20 and a pressure distribution detected by the grip sensor 71. As illustrated in the middle of FIG. 14, when the height of the grip 20 is appropriate, the force applied to the grip 20 from the user is distributed reasonably both in the moving direction (X axis direction) and the ground direction (Z axis direction). At that time, a mean value of time (time mean value) when a pressure is applied in the ground direction (Z axis direction) is within the predetermined range.

Meanwhile, as illustrated in the right side of FIG. 14, when the height of the grip 20 is low, the force applied to the grip 20 from the user is distributed larger in the ground direction (Z axis direction) than that of the moving direction (X axis direction). At that time, the mean value of time when the pressure is applied in the ground direction (Z axis direction) exceeds the predetermined upper limit value (outside the predetermined range).

Furthermore, as illustrated on the left side of FIG. 14, when the height of the grip 20 is high, the force applied to the grip 20 from the user is distributed larger in the moving direction (X axis direction) than that in the ground direction (Z axis direction). At that time, the mean value of time when the pressure is applied in the ground direction (Z axis direction) is lower than the predetermined lower limit value (outside the predetermined range).

When the user keeps walking while the height of the grip 20 remains inappropriately high, the burden to the user becomes larger and it may cause an unexpected injury or accident. Therefore, when it is detected, according to the output of the grip sensor 71, that the mean value of time of pressure applied in the ground direction with respect to the grip 20 is out of a predetermined range when the user is walking, the controller 80 controls a notifier 62 so as to notify to recommend an adjustment of the height of the grip 20. An alarm or voice guidance may be output by using a buzzer or speaker for the informing method to the user, or a lamp display using a light emitting diode or a message display using a liquid crystal display may also be used.

As described above, in the ambulatory assist vehicle 1 according to the second example, when it is detected, according to the output of the grip sensor 71, that a pressure applied in the ground direction with respect to the grip 20 is distributed continuously in the extending direction of the grip 20 when user is walking, the controller 80 may control the wheel driver 91 so as to lower the target values of the speed and acceleration of the ambulatory assist vehicle 1 to be lower than those of a steady state. Providing such a configuration allows reduced risk such as from falling down or the like by leaning on the vehicle while walking.

Further, the ambulatory assist vehicle 1 according to the second example further comprises the notifier 62 for notifying the user, and when it is detected, according to the output of the grip sensor 71, that the mean value of time of the pressure applied in the ground direction with respect to the grip 20 is out of the predetermined range when the user is walking, the controller 80 may control the notifier 62 so as to notify to recommend adjusting the height of the grip 20. Providing such configuration allows improved safety and reduced burden to be realized while walking because height adjustment can be prompted by bringing attention to the user that the height of the grip 20 is inappropriate.

### [Third Example]

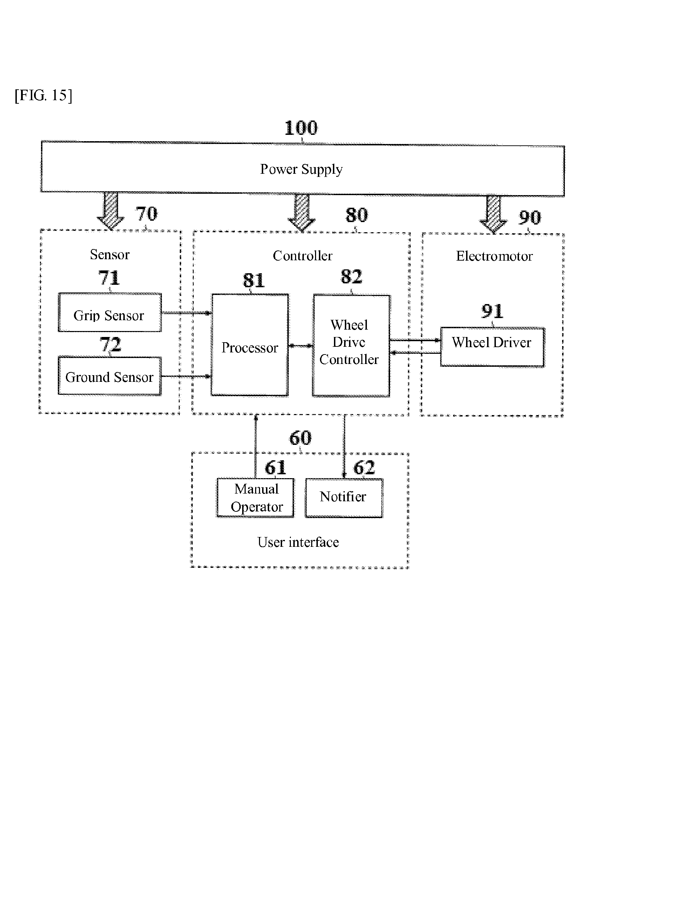

FIG. 15 is a functional block diagram illustrating a third example of an ambulatory assist vehicle 1. One or more embodiments of the third example may have fundamentally the same or substantially similar configuration as the first example above, and may comprise a ground sensor 72 as means to perform a safety function according to the grounded state of the wheel system 30. Therefore, the same or similar elements as those in the first example are given the same reference numbers as FIG. 2 and any duplicated description will be omitted. Descriptions of exemplary features of the third example will be given in detail hereinafter.

The ground sensor 72 may be configured to detect the grounded state of a drive wheel 31 and/or an idler wheel 32, respectively. The ground sensor 72 may comprise a suspension type load sensor provided between the vehicle body 10 and the wheel system 30 . The grounded state of the drive wheels 31 may be presumed from the output of a current sensor 913 mentioned above rather than by a separate load sensor. For example, when the drive current running to a motor 911 decreases sharply and falls below a predetermined threshold, it can be determined that a drive wheel 31 is in an ungrounded state.

When it is detected, according to the output of the ground sensor 72, that a drive wheel 31 is not grounded, the controller 80 may be configured to set various parameters of the wheel driver 91 so as to stop or put on the brake of the electromotive drive of the wheel system 30. Further, when it is detected according to the output of the ground sensor 72 that an idler wheel 32 is not grounded, the controller 80 may be configured to set various parameters of the wheel driver 91 so as to lower the target values of the speed and the acceleration of the ambulatory assist vehicle 1 to be lower than those of a steady state.

As described above, the ambulatory assist vehicle 1 according to the third example further comprises the ground sensor 72 that is configured to detect the grounded state of the drive wheels 31 and idler wheels 32 included in the wheel system 30. When it is detected that a drive wheel 31 is not grounded according to the output of the ground sensor 72, the controller 80 controls the wheel driver 91 so as to stop or put on the brake of the electromotive drive of the wheel system 30. When it is detected that an idler wheel 32 is not grounded, the controller 80 controls the wheel driver 91 to lower the target values of the speed and acceleration of the ambulatory assist vehicle 1 to be lower than those of a steady state. Providing such configuration allows increased safety when a drive wheel 31 and/or an idler wheel 32 are ungrounded.

### < Further Examples >

An ambulatory assist vehicle is described as an example in the embodiments described above; however, the application of the present invention is not limited thereto, and can be widely applied to any other manually propelled vehicle, such as, for example, baby carriages, dollies, wheelchairs, and the like.

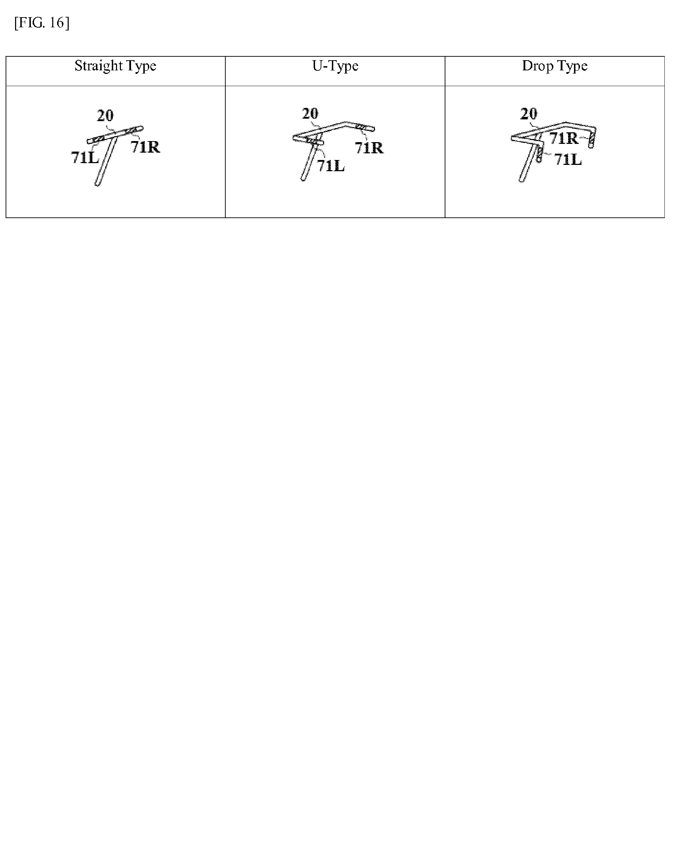

Further, a grip, in the embodiments described above, is of a straight type (T-shaped type); however, other shapes, such as U-shaped type or drop type, may be used as long as the change of a pressure distribution applied to the grip according to the walking posture and intention of the user can be detected (refer to FIG. 16).

In such a manner, various modifications may be made to the various technical features disclosed in the present specification without departing from the scope of its technical creation other than the embodiments described above. That is, the embodiments described above should be considered as exemplifications in all respects, and the technical scope of the present invention is indicated by the scope of claims rather than by the descriptions of the embodiments described above. Also it should be understood that all modifications that pertain to the scope or have equivalent meaning as the scope of claims are included herein.

The present invention can be used for safety improvement and/or convenience enhancement of a manually propelled vehicle. Again, although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

### [Description of the Reference Numerals]

- 1: ambulatory assist vehicle (manually propelled vehicle)
- 10: vehicle body
- 11: luggage compartment
- 20: grip
- 21: support
- 22 (22R, 22L): grip (right and left)
- 30: wheel system
- 31 (31R, 31L): drive wheel (right and left)
- 32 (32R, 32L): idler wheel (right and left)
- 40: seat (also upper lid of the luggage compartment)
- 50: backrest
- 60: user interface
- 61: manual operator
- 62: notifier (speaker)
- 70: sensor
- 71 (71R, 71L): grip sensor (right and left)
- 72: ground sensor
- 80: controller
- 81: processor
- 82: wheel drive controller
- 90: electromotor
- 91 (91R, 91L): wheel driver (right and left)
- 911 (911R, 911L): motor (right and left)
- 912 (912R, 912L): motor driver (right and left)
- 913 (913R, 913L): current sensor (right and left)
- 914 (914R, 914L): rotation angle sensor (right and left)
- 100: electric power supply
- PS: pressure sensor

## Claims

1. A manually propelled vehicle (1), comprising:
a vehicle body (10);
a grip (20) for a user to grip when walking;
a wheel system (30) for moving the vehicle body (10) along with the walking user;
a wheel driver (91) for electromotively driving the wheel system (30);
a grip sensor (71) configured to monitor distribution of pressure applied to the grip (20); and
a controller (80) configured to set parameters of the wheel driver (91) according to output of the grip sensor (71).

2. The manually propelled vehicle (1) according to claim 1, wherein the wheel system (30) comprises right and left drive wheels (31R, 31L) driven and controlled independently, and the controller (80) comprises:
a processor (81) configured to determine a turning target value according to the output of the grip sensor (71); and
a wheel drive controller (82) configured to control rotation direction and rotation speed of the right and left drive wheels (31R, 31L) according to the turning target value.

3. The manually propelled vehicle (1) according to claim 2, wherein
the processor (81) is further configured to detect whether the grip (20) is operated by both
hands or one hand of the user according to the output of the grip sensor (71), and when the processor (81) detects that the grip (20) is operated by both hands the turning
target value is determined according to a comparison result between a distribution of pressure applied by the left hand and a distribution of pressure applied by the right hand.

4. The manually propelled vehicle (1) according to claim 3, wherein, when the processor (81) detects, according to the output of the grip sensor (71), that the user is not gripping the grip (20), the controller (80) controls the wheel driver (91) so as to stop or apply a brake to an electromotive drive of the wheel system (30).

5. The manually propelled vehicle (1) according to claim 3 or claim 4, wherein, when the processor (81) detects, according to the output of the grip sensor (71), that the pressure applied in a ground direction with respect to the grip (20) is distributed continuously in an extending direction of the grip (20) when the user is walking, the controller (80) controls the wheel driver (91) to lower target values for speed and acceleration of the manually propelled vehicle (1) to be lower than the target values for speed and acceleration in a steady state.

6. The manually propelled vehicle (1) according to any one of claims 3 to 5, further comprising a notifier (62) for notifying the user information, wherein, when the processor (81) detects, according to the output of the grip sensor (71), that a time mean value of the pressure applied in a ground direction with respect to the grip (20) is outside a predetermined range when the user is walking, the controller (80) controls the notifier (62) so as to notify a recommendation to adjust a height of the grip (20).

7. The manually propelled vehicle (1) according to any one of claims 1 to 6, wherein the grip sensor (71) is a sheet-like member comprising a plurality of pressure sensors (PS) arranged in a matrix.

8. The manually propelled vehicle (1) according to any one of claims 3 to 7, further comprising a ground sensor (72) configured to detect a grounded state of the wheel system (30), wherein, when the processor (81) detects, according to the output of the ground sensor (72), that the wheel system (30) is not grounded, the controller (80) controls the wheel driver (91) so as to stop or apply a brake to the electromotive drive of the wheel system (30).

9. The manually propelled vehicle (1) according to any one of claims 3 to 8, wherein the wheel system (30) further comprises at least one idler wheel (32), and the manually propelled vehicle (1) further comprises a ground sensor (72) configured to detect a grounded state of the at least one idler wheel (32), wherein, when the processor (81) detects, according to the output of the ground sensor (72), that the at least one idler wheel (32) is not grounded, the controller (80) controls the wheel driver (91) to lower target values of speed and acceleration of the manually propelled vehicle (1) than the target values of speed and acceleration in a steady state.

10. The manually propelled vehicle (1) according to claim 3, wherein, when the processor (81) detects that the grip (20) is operated by one hand, the processor (81) divides a region where the pressure is applied by one hand into a first sub region (71L1) and a second sub region (71L2) and calculates the turning target value according to the comparison result of a distribution of pressure applied to the first sub region (71L1) and a distribution of pressure applied to the second sub region (71L2).

11. A method for controlling a manually propelled vehicle (1) comprising a vehicle body (10), a grip (20) for a user to grip when walking, a wheel system (30) for moving the vehicle body (10), and a wheel driver (91) for electromotively driving the wheel system (30), the method comprising:
monitoring distribution of pressure applied to the grip (20) using a grip sensor (71); and
setting parameters of the wheel driver (91) according to output of the grip sensor (71).

12. The method according to claim 11, wherein the wheel system (30) comprises right and left drive wheels (31R, 31L) driven and controlled independently, and the method further comprises:
determining a turning target value according to the output of the grip sensor (71); and
controlling rotation direction and rotation speed of the right and left drive wheels (31R, 31L) according to the turning target value.

13. The method according to claim 11 or claim 12, further comprising:
detecting whether the grip (20) is operated by both hands or one hand of the user according to the output of the grip sensor (71), and
determining, when the grip (20) is detected to be operated by both hands, the turning target value according to a comparison result between a distribution of pressure applied by the left hand and a distribution of pressure applied by the right hand.

14. The method according to claim 11 or claim 12, further comprising controlling, when the user is detected not to grip the grip (20), the wheel driver (91) so as to stop or apply a brake to the electromotive drive of the wheel system (30).

15. The method according to claim 11 or claim 12, further comprising controlling, when the pressure applied in a ground direction with respect to the grip (20) is detected to be distributed continuously in an extending direction of the grip (20) when the user is walking, the wheel driver (91) to lower target values for speed and acceleration of the manually propelled vehicle (1) to be lower than the target values for speed and acceleration in a steady state.

16. The method according to any one of claims 11-15, further comprising:
detecting a time mean value of the pressure applied in a ground direction with respect to the grip (20) according to the output of the grip sensor (71); and
notifying a recommendation to the user to adjust a height of the grip (20) when the time mean value is detected to be outside a predetermined range when the user is walking.

17. The method according to any one of claims 11-16, further comprising using a sheet-like member comprising a plurality of pressure sensors (PS) arranged in a matrix as the grip sensor (71).

18. The method according to any one of claims 11-17, further comprising:
detecting a grounded state of the wheel system (30); and
controlling, when the wheel system (30) is detected not to be grounded, the wheel driver (91) so as to stop or apply a brake to the electromotive drive of the wheel system (30).

19. The method according to any one of claims 11-18, wherein the wheel system (30) further comprises at least one idler wheel (32), and the method further comprises:
detecting a grounded state of the at least one idler wheel (32); and
controlling, when the at least one idler wheel (32) is detected not to be grounded, the wheel driver (91) to lower target values of speed and acceleration of the manually propelled vehicle (1) than the target values of speed and acceleration when in a steady state.

20. The method according to any one of claims 13-19, further comprising:
when the grip (20) is detected to be operated by one hand, dividing a region where the pressure is applied by one hand into a first sub region (71L1) and a second sub region (71L2) and calculating the turning target value according to the comparison result of a distribution of pressure applied to the first sub region (71L1) and a distribution of pressure applied to the second sub region (71L2).
